# EUROPÄISCHE PATENTANMELDUNG

(11) **EP 2 023 099 A2**
(43) Veröffentlichungstag der Anmeldung: **11.02.2009**
(21) Anmeldenummer: 08013002.4
(22) Anmeldetag: 18.07.2008
(51) Int. Cl.: G01G 3/14, G01G 19/08

(54) **Anordnung zur Ermittlung einer an einem Zugmittel angreifenden Kraft**

(30) Priorität: 30.07.2007 DE 102007035947
(71) Anmelder: Soehnle Professional GmbH & Co. KG, 71522 Backnang (DE)
(72) Erfinder: Gerster, Stephan, 53343 Wachtberg-Pech (DE)
(74) Vertreter: Ullrich & Naumann

(57) **Zusammenfassung**

Eine Anordnung zur Ermittlung einer an einem Zugmittel (2) angreifenden Kraft mittels eines Sensors (9), ist im Hinblick auf eine möglichst einfache Messung der Kraft bei einfachster konstruktiver Ausgestaltung dadurch gekennzeichnet, dass sich das Zugmittel (2) durch einen Festkörper (5) hindurch erstreckt und dass sich der Sensor (9) an dem Festkörper (5) abstützt und die zwischen dem Zugmittel (2) und dem Festkörper (5) wirkende Kraft misst.

## Beschreibung

Die Erfindung betrifft eine Anordnung zur Ermittlung einer an einem Zugmittel angreifenden Kraft mittels eines Sensors.

Die Messung von an Zugmitteln angreifenden Kräften ist in der Technik eine häufig gestellte Aufgabe. Zugmittel sind generell mit lediglich begrenzten Kräften belastbar. Auch wenn diese Kräfte je nach Ausgestaltung des Zugmittels recht hohe Werte annehmen können, so ist dennoch ein Grenzwert gegeben, mit dessen Überschreiten eine Beeinträchtigung oder gar eine Zerstörung des Zugmittels einhergeht. Bereits vor Erreichen dieser Grenze kann eine Belastung erreicht sein, bei der Maschinenbestandteile oder die Maschine selbst beschädigt oder vollständig zerstört werden können. So können beispielsweise Umlenkrollen, Walzen, Achsen, Lager oder Motoren in Mitleidenschaft gezogen werden. Zudem besteht die Möglichkeit, dass es zu einem Kippen der Maschine infolge einer zu hohen Belastung kommt. Daher ist es vielfach wünschenswert oder notwendig, die an dem Zugmittel angreifende Kraft zu kennen oder zumindest abschätzen zu können. Beispielhafte Einsatzbereiche derartiger Anordnungen umfassen Kräne, Gabelstapler, Aufzüge, Seilbahnen oder dergleichen.

In der Praxis wird die Belastung eines Zugmittels auf verschiedenste Art und Weise bestimmt. So wird beispielsweise bei Zugmitteln, die durch einen Elektromotor angetrieben sind, die durch den Elektromotor aufgenommene elektrische Leistung ermittelt. Die aufgenommene elektrische Leistung hängt von dem an der Motorenwelle wirkenden Drehmoment und damit von der Belastung des Motors ab. Je höher das Drehmoment ist, desto höher wird die Leistungsaufnahme des Motors sein. Bei Erreichen eines maximalen Stroms in den Zuleitungen des Elektromotors kann eine Schaltung den Motor deaktivieren und dadurch eine übermäßige Belastung des Motors, des Zugmittels oder anderer Maschinenteile vermieden werden.

Bei anderen aus der Praxis bekannten Verfahren wird ebenso die an dem Zugmittel angreifende Kraft indirekt bestimmt. So kann beispielsweise bei Gabelstaplern der in dem Pneumatikzylinder herrschende Druck bestimmt und daraus die Belastung des Zugmittels abgeschätzt werden. Gabelstapler verfügen über Pneumatikzylinder, in dem ein Kolben bewegbar angeordnet ist. Bei Bewegung des Kolbens wird eine Umlenkrolle mitbewegt. Über die Umlenkrolle ist eine Zugkette gelenkt, die an dem einen Ende mit dem Rahmen des Gabelstaplers verbunden ist und an dem anderen Ende an einem Hubgerüst befestigt ist. Bewegt sich der Kolben nach oben, wird die Zugkette über die Umlenkrolle bewegt und das Hubgerüst nach oben gezogen. Zur Bestimmung der auf das Zugmittel - die Zugkette - wirkenden Kraft kann der Druck in dem Pneumatikzylinder bestimmt werden. Diese hängt von der Belastung des Hubgerüsts ab.

Problematisch an derartigen Verfahren ist, dass sie lediglich relativ ungenaue Werte über die tatsächliche Belastung des Zugmittels liefern können. Die auf diese Weise bestimmten Werte sind von vielen anderen Faktoren, beispielsweise Reibungen in Getrieben, Umlenkrollen und anderen Störgrößen, abhängig. Zudem wirkt sich die indirekte Messung negativ aus.

Der vorliegenden Erfindung liegt daher die Aufgabe zugrunde, eine Anordnung der eingangs genannten Art derart auszugestalten und weiterzubilden, dass die an dem Zugmittel angreifende Kraft möglichst einfach und mit einfachsten konstruktiven Mitteln gemessen werden kann.

Erfindungsgemäß wird die voranstehende Aufgabe durch die Merkmale des Patentanspruches 1 gelöst. Danach ist die in Rede stehende Anordnung dadurch gekennzeichnet, dass sich das Zugmittel durch einen Festkörper hindurch erstreckt und dass sich der Sensor an dem Festkörper abstützt und die zwischen dem Zugmittel und dem Festkörper wirkende Kraft misst.

In erfindungsgemäßer Weise ist zunächst erkannt worden, dass eine an einem Zugmittel angreifende Kraft am einfachsten dort bestimmt werden kann, wo sie in einen anderen Festkörper eingeleitet wird. Durch Messung der Kraft an dem Punkt der Krafteinleitung kann am einfachsten auf die an dem Zugmittel insgesamt angreifenden Kraft geschlossen werden. Erfindungsgemäß ist dazu die Verbindung zwischen Zugmittel und dem Festkörper derart ausgestaltet, dass sich das Zugmittel durch den Festkörper hindurch erstreckt. Dieser Festkörper kann prinzipiell durch die verschiedensten Materialien gebildet sein und die unterschiedlichsten Formgebungen aufweisen. Voraussetzung ist lediglich, dass die an dem Zugmittel angreifende Kraft durch den Festkörper aufgenommen werden kann. Diese Kraft wird durch einen Sensor bestimmt, der sich an dem Festkörper abstützt. Dabei ist der Sensor derart angeordnet, dass er die zwischen dem Zugmittel und dem Festkörper wirkende Kraft misst. Dadurch kann die von dem Zugmittel in den Festkörper eingeleitete Kraft bestimmt und daraus auf die an dem Zugmittel angreifende Kraft geschlossen werden. In einigen Fällen kann hierzu die Verwendung von Informationen über die Geometrie und/oder Dynamik der Anordnung notwendig, die im Allgemeinen jedoch vorliegen werden.

Der Festkörper lässt sich durch die verschiedensten aus der Praxis bekannten Ausgestaltungen realisieren. So könnte der Festkörper beispielsweise als Balken, Traverse, Bogen oder Träger ausgebildet sein. Auch andere Ausgestaltungen sind denkbar. Dabei kann der Festkörper lediglich zum Ableiten der an dem Zugmittel angreifenden Kraft vorgesehen sein, könnte jedoch auch darüber hinaus gehende Aufgaben erfüllen. Beispielsweise kann der Festkörper in einer Rahmenkonstruktion das Ableiten oder Weiterleiten anderer Kräfte übernehmen. Hierbei muss lediglich gewährleistet sein, dass durch den Festkörper die zusätzlich über das Zugmittel eingeleitete Kraft aufgenommen werden kann. Dies ist jedoch eine im Allgemeinen einfach zu erfüllende Forderung.

Zudem kann der Festkörper prinzipiell aus den verschiedensten Materialien oder Materialkombinationen bestehen. Stahl, Holz oder Kunststoffe sind ebenso einsetzbar wie Stahlbeton oder Faserverbundstoffe. Das eingesetzte Material muss lediglich mechanisch ausreichend stabil sein. Zudem ist es vergleichsweise unerheblich, in welchem Profil der Festkörper ausgebildet ist. Der Träger kann einen einfachen rechteckigen Querschnitt ausweisen, könnte jedoch auch aus einem relativ beliebig kompliziert aufgebauten Profil bestehen. Dies wird im Allgemeinen unerheblich sein.

Das Zugmittel kann ebenso auf verschiedenste Arten realisiert sein. Lediglich beispielhaft, jedoch nicht auf diese beschränkt, könnte das Zugmittel durch ein Seil, eine Kette oder eine Stange gebildet sein. Voraussetzung ist lediglich, dass das Zugmittel zum Weiterleiten der angreifenden Kräfte geeignet ist. Ob das Zugmittel starr - wie beispielsweise bei einer Stange - oder lediglich in einer oder mehreren Richtungen flexibel - wie beispielsweise bei einer Kette bzw. einem Seil - ausgestaltet ist, ist im Wesentlichen unerheblich. Ebenso könnte das Zugmittel aus den unterschiedlichsten Materialien bestehen. In vielen Fällen wird das Zugmittel zwar aus einem Stahl gefertigt sein, allerdings könnte es auch aus Kunststoff, Kohlenstoff-, Kunststoff- oder anderen Fasern und Faserverbundstoffen bestehen.

Dabei könnte das Zugmittel Bestandteil einer Maschine sein. In dem Beispiel eines Gabelstaplers könnte das Zugmittel die Lastkette des Gabelstaplers umfassen. Im Falle eines Aufzugs könnte das Trageseil des Aufzugs als Zugmittel wirken. Auch bei anderen Maschinen könnte das Zugmittel Bestandteil der Maschine sein und dort Funktionen dieser Maschine übernehmen.

Andererseits könnte der Festkörper Bestandteil einer Maschine sein. Im Beispiel des Aufzugs könnte der Festkörper durch einen Querträger gebildet sein, an dem der Aufzug befestigt ist. Im Falle einer Seilbahn könnte der Festkörper durch eine Halterung an einer Basis- oder Zwischenstation gebildet sein. Die Art, wie der Festkörper gebildet ist, wird im Allgemeinen von dem jeweiligen Anwendungsfall abhängen.

Zudem könnten Zugmittel und Festkörper Bestandteil der gleichen Maschine sein. Dies wird am Beispiel eines Gabelstaplers deutlich: Das Zugmittel ist durch die Lastkette des Gabelstaplers gebildet, während ein Rahmenteil des Gabelstaplers bzw. ein Teil des Hubgerüsts den Festkörper bildet. Zugmittel und Festkörper sind somit Bestandteil der gleichen Maschine. Bei anderen Maschinen sind entsprechende Ausgestaltungen denkbar.

Allerdings ist es auch möglich, dass der Festkörper kein Bestandteil einer Maschine ist. Beispielhaft sei auf einen Prüfstand für die Belastbarkeit eines Krans hingewiesen. Hier könnte das Zugseil des Krans an einem Träger befestigt sein, der am Boden verankert ist. An dem Zugseil würden die durch einen Motor des Krans erzeugten Kräfte angreifen, die in den Träger abgeleitet werden. In diesem Beispiel wäre der Träger - der Festkörper - kein Bestandteil einer Maschine im engeren Sinne.

Vorzugsweise kommt die erfindungsgemäße Anordnung im Zusammenhang mit einem Gabelstapler zum Einsatz. Dort wird die auf die Lastkette oder ein sonstiges Zugmittel wirkende Kraft bestimmt. Diese Kraft ist im Wesentlichen davon abhängig, welche Lasten mit dem Gabelstapler gehoben werden. Je schwerer die gehobenen Lasten sind, desto höhere Kräfte müssen durch das Zugmittel aufgebracht werden. Diese lassen sich durch die erfindungsgemäße Anordnung bestimmen. Dazu ist am Befestigungspunkt des Zugmittels an dem Rahmen des Gabelstaplers ein Sensor angeordnet. Alternativ oder zusätzlich kann der Sensor an einem Element des Hubgerüsts angeordnet sein. Damit kann festgestellt werden, wenn der Gabelstapler außerhalb des zulässigen Belastungsbereichs betrieben wird.

Vorteilhafterweise könnte an dem Zugmittel ein Befestigungsmittel angebracht sein. Dadurch würde die Bewegung des Zugmittels zumindest in eine Richtung verhindert und - bei geeigneter Anbringung - eine Krafteinleitung in den Festkörper ermöglicht werden. Das Befestigungsmittel könnte dabei durch die verschiedensten aus der Praxis bekannten Anordnungen realisiert sein. Lediglich beispielhaft sei auf die Verwendung einer Klemme, eines Bolzens, eines Sprengrings oder dergleichen als Befestigungsmittel hingewiesen.

Dazu könnte an dem Ende des Zugmittels ein Kopplungselement angebracht sein, an dem das Befestigungsmittel angebracht ist. Das Kopplungselement könnte über geeignete Nuten, Löcher, Gewinde oder über sonstige Mittel verfügen, um eine Befestigung eines Befestigungsmittels zu ermöglichen. Das Befestigungsmittel könnte durch eine Mutter gebildet sein, die durch eine Kontermutter gesichert sein kann. Bei dieser Ausgestaltung würde die an dem Zugmittel angreifende Kraft über das Befestigungsmittel, das dann als Teil des Zugmittels aufgefasst werden kann, und über den Sensor in den Festkörper eingeleitet werden.

In einer bevorzugten Ausgestaltung des Sensors umfasst der Sensor einen Grundkörper. Dieser Grundkörper ist aus einem festen aber in gewissen Grenzen verformbaren Material hergestellt. Hierzu kommen beispielsweise Stähle in Frage. Allerdings können auch andere Materialien eingesetzt werden, die zur Aufnahme der auftretenden Kräfte in der Lage sind.

Der Grundkörper weist vorzugsweise zwei ineinander angeordnete Ringe auf. Dabei könnte ein äußerer Ring vorgesehen sein, innerhalb dessen ein innerer Ring angeordnet ist. Diese Ringe sind vorzugsweise biegesteif ausgebildet. Die Ringe könnten prinzipiell die verschiedensten geometrischen Ausbildungen aufweisen. So könnten die Ringe durch Vielecke, Ellipsen oder relativ beliebig strukturierte Gebilde ausgeführt sein. Vorzugsweise sind die Ringe jedoch kreisförmig ausgebildet und sind an ihren Stirnseiten plan ausgeführt. Dabei könnten die Ringe konzentrisch angeordnet sein.

Vorteilhafterweise sind die beiden Ringe des Sensors durch einen ringförmigen Bodenbereich oder durch Stege miteinander verbunden. Dadurch sind die Ringe in ihrer örtlichen Lage relativ zueinander mehr oder weniger fixiert. Der Bodenbereich oder die Stege sind dabei derart ausgebildet, dass eine Verformbarkeit des Bodenbereichs oder der Stege erreicht werden kann. Das Ausmaß der Verformbarkeit hängt davon ab, wie groß die zu messende Kraft ist. Können lediglich geringe maximale Kräfte durch das Zugmittel aufgenommen werden, so könnten der Bodenbereich oder die Stege vergleichsweise dünn und somit leicht verformbar sein. Sind die Kräfte relativ groß, so könnte die Verformbarkeit relativ gering sein. In diesem Fall können die Stege oder der Bodenbereich entsprechend dick ausgebildet sein.

Zur Bestimmung der Verformung des Bodenbereichs oder der Stege könnten Dehnungsmessstreifen vorgesehen sein. Diese lassen sich mit dem Bodenbereich oder den Stegen verkleben oder auf sonstige Weise dort befestigen. Wirkt auf die Ringe eine Kraft, die zu einer Verformung des Bodenbereichs oder der Stege führt, so kann die Verformung durch die Dehnungsmessstreifen detektiert werden. Dies stellt ein Maß für die Belastung des Sensors und somit ein Maß für die an dem Zugmittel angreifende Kraft dar. Zusammen mit den mechanischen Eigenschaften des Grundkörpers, insbesondere dessen Federkonstante, kann aus dem Messsignal der Dehnungsmessstreifen auf die angreifende Kraft geschlossen werden.

Vorzugsweise wirkt die Kraft auf den Sensor derart, dass die beiden Ringe in axialer Richtung belastet werden. Dadurch entsteht eine Verschiebung der Ringe in axialer Richtung. Damit kann eine relativ gleichförmige Verformung des Bodenbereichs bzw. der Stege erreicht werden.

Zum Erreichen einer besseren Verschiebbarkeit der Ringe relativ zueinander könnten die Ringe zumindest in eine Richtung nicht bündig miteinander abschließen. In Richtung des Festkörpers könnte beispielsweise der äußere Ring auf dem Festkörper aufsitzen, während der innere Ring in Abstand zu dem Festkörper endet. Alternativ oder zusätzlich könnten auf der dem Festkörper abgewandten Seite die beiden Ringe nicht bündig enden.

In einer bevorzugten Ausführungsform ist auf der dem Festkörper abgewandten Seite des Sensors eine Scheibe angeordnet, die den Sensor mechanisch gegenüber äußeren Einflüssen schützt. Die Scheibe könnte dabei zwischen Sensor und Befestigungsmittel angeordnet sein. In diesem Fall könnte bei einem nichtbündigen Abschluss der Ringe auf der der Scheibe zugewandten Seite der innere Ring in Kontakt mit der Scheibe stehen, während der äußere Ring einen Spalt zu der Scheibe bildet.

Die zuvor aufgezeigten Ausgestaltungen, bei denen sich ein Spalt ausbildet, sind dahingehend vorteilhaft, dass bei Belastung des Sensors sich die Ringe relativ zueinander derart bewegen, dass sich der Spalt zwischen einem Ring und dem Festkörper bzw. der Scheibe reduziert. Dadurch entsteht auf vergleichsweise einfache Art und Weise ein Überlastschutz. Bei Erreichen einer maximalen Belastung wird der Spalt bzw. werden die Spalte derart weit reduziert, dass die Ringe auf dem entsprechenden Gegenlager aufsitzen. Bei den oben beschriebenen Ausgestaltungen würde der innere Ring den Festkörper, der äußere Ring die Scheibe kontaktieren. Auf diese Weise wäre eine Überbelastung des Sensors wirkungsvoll verhindert.

Zur Auswertung der Messsignale des Sensors ist eine Auswerteschaltung vorgesehen. Diese könnte auf die verschiedensten aus der Praxis bekannten Arten ausgebildet sein. Analoge Auswerteschaltungen lassen sich ebenso verwenden wie digitale. In einer bevorzugten Ausführungsform kommt eine Kombination aus analoger und digitaler Auswerteschaltung zum Einsatz.

Hinsichtlich einer möglichst störungsfreien und sicheren Übertragung der Messsignale von den Sensorelementen an die Auswerteschaltung könnte die Auswertschaltung im Inneren des Sensors integriert sein. Dabei könnten der äußerer Ring, der innere Ring und der Bodenbereich bzw. die Stege derart ausgebildet und angeordnet sein, dass ein konkaver Bereich zwischen den Ringen entsteht. In diesem konkaven Bereich könnte die Auswertschaltung angeordnet sein, die vorzugsweise auf einer ringförmigen Platine aufgebracht ist. Dadurch ließe sich ein optimal kurzer Leitungsweg zwischen den Sensorelementen - den Dehnungsmessstreifen - und der Auswerteschaltung erzielen. Zudem ist durch die Ausgestaltung des Sensors aus Metall wirkungsvoll eine elektromagnetische Abschirmung der Auswerteschaltung erreicht.

Zum Erreichen einer mechanischen Stabilität und zum Schutz der Auswerteelektronik vor Erschütterungen könnte die Auswerteschaltung in einer Vergussmasse eingebettet sein. Dadurch würde zusätzlich ein Schutz vor Verschmutzung der Elektronik und vor Feuchtigkeit erreicht. Die Vergussmasse könnte durch die verschiedensten aus der Praxis bekannten und mit den entsprechenden mechanischen Eigenschaften versehenen Materialien gebildet sein.

Hinsichtlich einer möglichst effektiven Auswertung der Sensorsignale könnte die Auswerteschaltung eine Wheatston'sche Brücke umfassen. Dabei könnten die Sensorelemente selbst zu einer Wheatston'sche Brücke verschaltet sein. Entsprechende Schaltungen sind aus der Praxis hinlänglich bekannt.

Vorzugsweise wird durch die Auswerteschaltung ein digitales Auswertesignal erzeugt. Dadurch könnte das Ausgangssignal besonders unempfindlich gegenüber Störungen von der Auswerteschaltung bzw. dem Sensor nach Außen übertragen werden. Dabei umfasst die Auswerteschaltung vorzugsweise bereits ein digitales Verarbeitungselement, das durch einen Mikrokontroller gebildet sein kann. Aller-dings könnte das Verarbeitungselement auch durch einen digitalen Signalprozessor oder durch speziell entworfene Schaltungen beispielsweise in einem ASIC (Application Specific Integrated Circuit) oder einem FGPA (Field Gate Programmable Array) gebildet sein.

Hinsichtlich einer möglichst einfachen Auswertbarkeit des Ausgangssignals könnte das Ausgangssignal pulsweiten-moduliert sein. Dabei würde der Messwert des Sensors in dem Tastverhältnis, d. h. dem Verhältnis zwischen der Zeit, in dem das Signal einen High-Pegel annimmt, und der Periodendauer des pulsweiten-modulierten Signals, kodiert werden. Diese Ausgestaltung wäre dahingehend vorteilhaft, dass an einem Empfänger das pulsweiten-modulierte Signal mittels eines einfachen Zählwerks dekodiert werden kann. Ein Analog-/Digital-Umsetzer wird nicht benötigt.

Zur Übertragung des Ausgangssignals aus dem Sensor heraus könnte ein Messkabel vorgesehen sein. Alternativ oder zusätzlich könnte das Ausgangssignal über eine drahtlose Verbindung ausgegeben werden. In diesem Fall müsste lediglich eine Stromversorgung des Sensors bzw. der Auswerteelektronik vorgesehen sein, was im Allgemeinen einfach möglich ist. Die Stromversorgung könnte auch durch eine Batterie oder einen Akkumulator realisiert sein.

Die derart gewonnenen und nach außen übertragenen Messwerte könnten für die verschiedensten Zwecke genutzt werden. So könnten zum einen die Messwerte einer Steuerungseinheit zugeleitet werden, mit der die Funktion der Maschine gesteuert wird. Auf diese Weise könnte beispielsweise bei einer zu hohen Belastung des Zugmittels der Motor der Maschine gestoppt werden. Kommt die Anordnung beispielsweise bei einem Gabelstapler zum Einsatz, so könnte auf diese Weise ein Kippen des Gabelstaplers verhindert werden.

Andererseits könnten die Messwerte des Sensors in einen Speicher protokolliert werden. Dabei besteht der Speicher vorzugsweise aus einem nicht-flüchtigen Speicher, der gespeicherte Daten ohne Energieversorgung halten kann. Entsprechende geeignete Speicher sind aus der Praxis bekannt und gut verfügbar.

Zum Vermeiden eines Speicherns übermäßig vieler Messwerte könnten lediglich einzelne Messwerte protokolliert werden. Dies könnten vorzugsweise die Messwerte sein, bei denen ein vorgebbarer Wert überschritten wird. Damit ließen sich das Vorliegen und die Dauer maximaler Belastungszustände einer Maschine effektiv protokollieren und für die Wartung heranziehen. Allerdings könnten auch einzelne Messwerte basierend auf anderen Selektionskriterien gespeichert werden.

Dabei könnte der Speicher einerseits in einem externen Gerät, beispielsweise in einer Steuerungseinheit der Maschine, integriert sein. Andererseits könnte der Speicher Bestandteil der Auswerteschaltung sein. Dadurch könnte die Protokollierung unabhängig von dem eingesetzten Steuerungssystem verwendet werden. Für das Auslesen des Speichers könnten entsprechende drahtgebundene oder drahtlose Schnittstellen vorgesehen sein.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigen
- Fig. 1: eine Schrägansicht einer erfindungsgemäße Anordnung,
- Fig. 2: eine Ansicht der Anordnung gemäß Fig. 1, wobei die Anordnung mit Blick-richtung von unten dargestellt ist,
- Fig. 3: ein Schnitt durch die Anordnung gemäß Fig.1 1 längs der Schnittlinie A - A,
- Fig. 4: eine Detailvergrößerung des Bereiches B aus Fig. 3,
- Fig. 5: ein in der erfindungsgemäßen Anordnung eingesetzter Sensor in Schrägansicht,
- Fig. 6: der Sensor gemäß Fig. 5 in einer Aufsicht und
- Fig. 7: in einem Schnitt der Sensor gemäß Fig. 5 längs der Schnittlinie C - C.

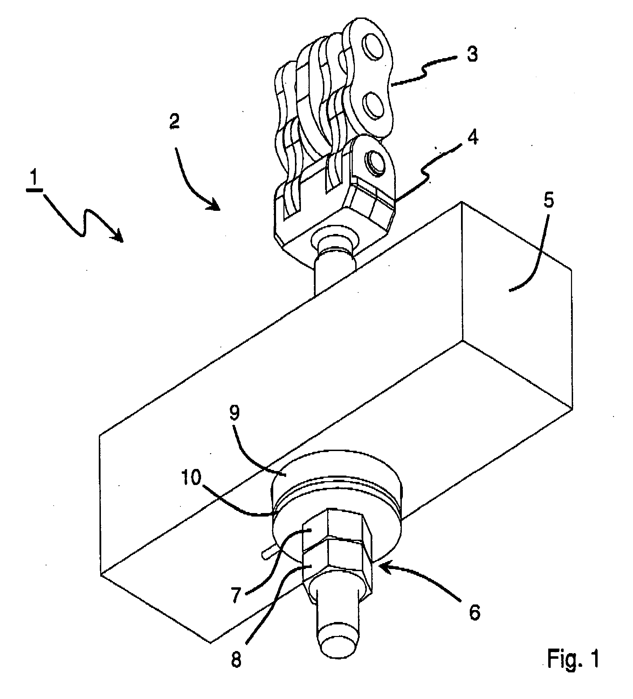

Fig. 1 zeigt eine Ausgestaltung einer erfindungsgemäßen Anordnung 1 zum Messen einer an einem Zugmittel 2 angreifenden Kraft. Das Zugmittel 2 ist durch eine Kette 3 gebildet, an deren Ende ein Kopplungselement 4 ausgebildet ist. Das Kopplungselement 4 ist durch ein Durchführungsloch eines Festkörpers 5 in Form einer Traverse hindurchgeführt. Das Zugmittel 2 ist somit durch die Kette 3 und das Kopplungselement 4 gebildet und erstreckt sich durch den Festkörper 5 hindurch. Auf der dem Festkörper 5 gegenüberliegenden Seite ist das Zugmittel 2 durch ein Befestigungsmittel 6 in Zugrichtung fixiert. Das Befestigungsmittel 6 ist durch eine Mutter 7 gebildet, die durch eine Kontermutter 8 gesichert ist. Durch Verstellen der Mutter und der Kontermutter kann eine Längeneinstellung der Kette erreicht werden. Zwischen Befestigungsmittel 6 und Festkörper 5 sind ein Sensor 9 und eine Scheibe 10 angeordnet. Diese werden in Bezug auf die weiteren Figuren detailliert beschrieben.

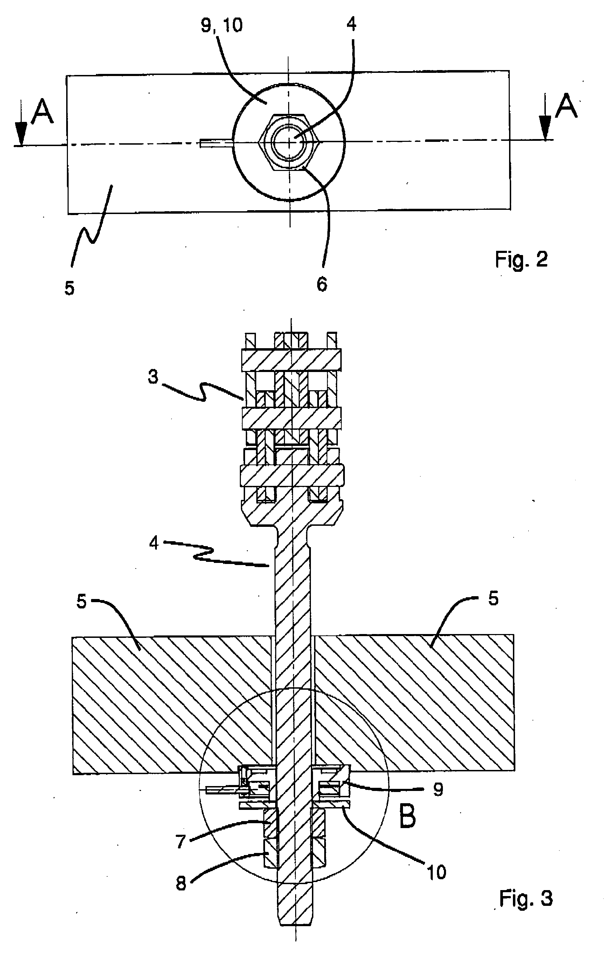

In Fig. 2 ist die Anordnung 1 gemäß Fig. 1 mit Blick von unten nochmals dargestellt. Zu erkennen ist der Festkörper 5, durch den sich das Kopplungselement 4 erstreckt. Das Kopplungselement 4 ist durch das Befestigungsmittel 6 gesichert. Zwischen dem Befestigungsmittel und dem Festkörper 5 ist der Sensor 9 und die Scheibe 10 angeordnet, die sich in Fig. 2 überlappen.

Die Anordnung gemäß Fig. 1 ist in Fig. 3 im Schnitt dargestellt. Der Schnitt verläuft dabei entlang der in Fig. 2 eingezeichneten Schnittlinie A - A. Hier ist deutlich zu erkennen, dass das Kopplungselement 4 durch ein Durchführungsloch durch den Festkörper 5 hindurchgeführt ist und auf der gegenüberliegenden Seite durch die Mutter 7 und die Kontermutter 8 befestigt ist. Zwischen der Mutter 7 und dem Festkörper 5 sind der Sensor 9 und die Scheibe 10 angeordnet.

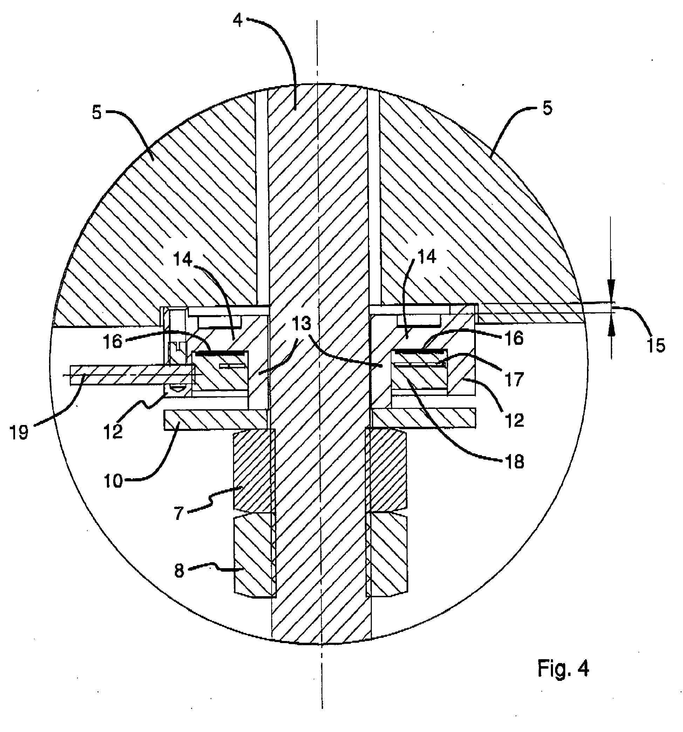

Der Sensor ist nochmals als Detailvergrößerung in Fig. 4 dargestellt. Der Sensor 9 ist in einer leichten Vertiefung in dem Festkörper 5 eingelassen und besteht aus einem Grundkörper 11, in dem ein äußerer Ring 12 und ein innerer Ring 13 ausgebildet ist. Die beiden Ringe 12, 13 sind über einen ringförmigen Bodenbereich 14 miteinander verbunden. Der äußere Ring 12 steht in direktem Kontakt mit dem Festkörper 5, während der innere Ring 13 in Abstand zu dem Festkörper 5 endet. Dadurch bildet sich ein Spalt 15 zwischen dem inneren Ring 13 und dem Festkörper 5 aus. Entsprechendes gilt für den äußeren Ring 12 und der Scheibe 10. Der innere Ring 13 steht in Kontakt zu der Scheibe 10, während ein Spalt zwischen dem äußeren Ring 12 und der Scheibe 10 entsteht. Bei Belastung des Sensors durch eine in der Figur nach oben gerichteten Kraft kommt es zu einer Verschiebung des inneren Rings 13 relativ zu dem äußeren Ring 12. In Abhängigkeit von der Belastung reduziert sich der Spalt 15. Bei Erreichen einer maximalen Belastung schlägt der innere Ring 13 auf dem Festkörper 5 bzw. der äußere Ring 12 auf der Scheibe 10 auf, sodass eine Überbelastung des Sensors ausgeschlossen wird. Dadurch ist der Sensor effektiv gegenüber Zerstörung durch zu hohe Belastungen geschützt.

Durch Belastung des Sensors 9 durch eine an dem Zugmittel 2 angreifende Kraft wird der Bodenbereich 14 verformt. Diese Verformung wird durch Dehnungsmessstreifen 16 detektiert, die mit dem Bodenbereich 14 verklebt sind. Die Messsignale der Dehnungsmessstreifen 16 werden einer Auswerteschaltung, die auf einer ringförmigen Platine 17 angeordnet ist, zugeleitet und dort ausgewertet. Die Platine 17 ist in einem durch den äußeren Ring 12, den Bodenbereich 14 und den inneren Ring 13 gebildeten konkaven Bereich angeordnet und in einer Vergussmasse 18 zum Schutz vor Erschütterungen, Schmutz und Feuchtigkeit eingebettet.

Die durch die Auswerteschaltung aufbereiteten Messsignale werden über ein Anschlusskabel 19 nach außen gegeben, von dem in den Figuren lediglich ein kleines Teilstück angedeutet ist.

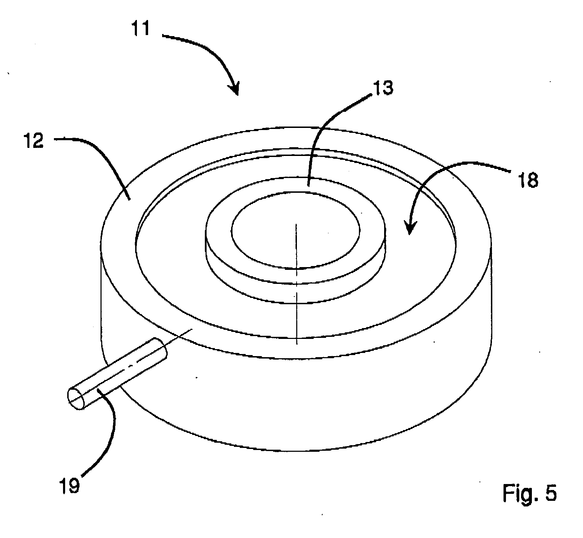

Fig. 5 zeigt den Sensor 9 nochmals in einer Schrägansicht, wobei der Sensor im Vergleich zu der Darstellung in Fig. 4 um 180° gedreht dargestellt ist, d.h. die Ansicht in Fig. 5 entspricht einem Blickwinkel von unten in Fig. 4. Zu Erkennen ist in Fig. 5 der Grundkörper 11, in dem ein äußerer Ring 12 und ein innerer Ring 13 ausgebildet sind. Zwischen den Ringen 12, 13 ist der konkave Bereich mit einer Vergussmasse 18 ausgegossen, in der die Platine 17 für die Auswerteelektronik eingebettet ist.

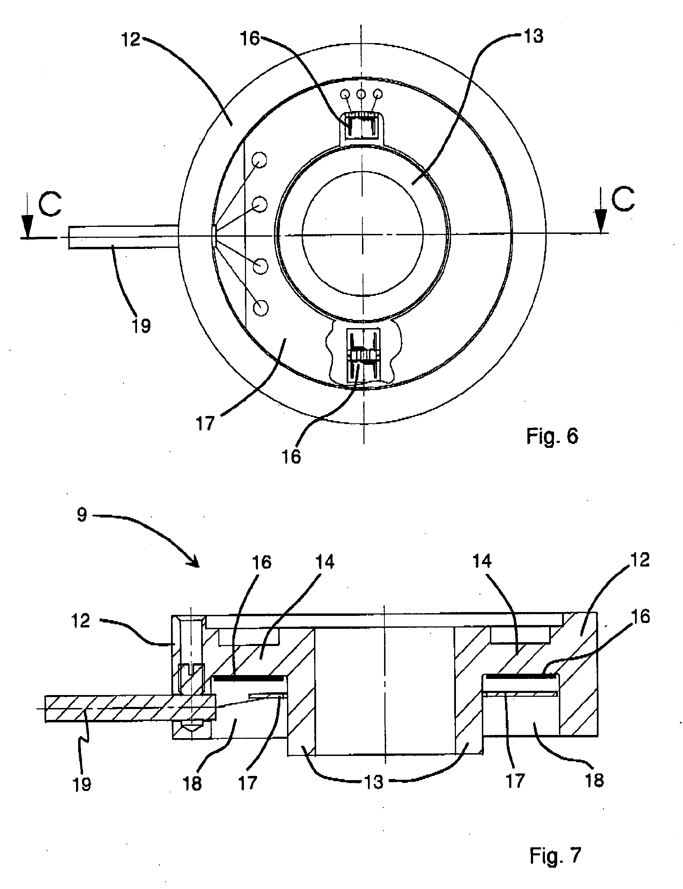

Fig. 6 zeigt den gleichen Sensor 9 nochmals in einer Aufsicht. Hierbei ist die zwischen dem äußeren Ring 12 und dem inneren Ring 13 angeordnete Platine 17 zu erkennen. Die Platine 17 ist mit Ausnehmungen dargestellte, um den Blick auf die Dehnungsmessstreifen 16 freizugeben. Die Dehnungsmessstreifen 16, die die Verformung des ringförmigen Bodenbereichs 14 zwischen dem äußeren Ring 12 und dem inneren Ring 13 messen, sind mit der Platine und somit mit der Auswerteschaltung verbunden. Die Auswerteschaltung bestimmt den Grad der Verformung der Bodenbereichs und gibt die Informationen über das Messkabel 19 nach außen. Die Informationen können reine Daten zur Belastung des Sensors sein. Allerdings können auch bereits aufgewertete Daten, beispielsweise in Form von zugeordneten Werten der Belastung des Zugmittels, umfassen.

Zur weiteren Verdeutlichung zeigt Fig. 7 nochmals einen Schnitt durch den Sensor gemäß Fig. 5 und Fig. 6 längs der Schnittlinie C-C. Hierbei sind nochmals die einzelnen Elemente etwas deutlicher zu erkennen. Zur Vermeidung von Wiederholungen sei auf die Erläuterungen zu Fig. 4 verwiesen.

Hinsichtlich weiterer vorteilhafter Ausgestaltungen der erfindungsgemäßen Anordnung wird zur Vermeidung von Wiederholungen auf den allgemeinen Teil der Beschreibung sowie auf die beigefügten Patentansprüche verwiesen.

Schließlich sei ausdrücklich darauf hingewiesen, dass das voranstehend beschriebene Ausführungsbeispiel der erfindungsgemäßen Vorrichtung lediglich zur Erörterung der beanspruchten Lehre dienen, diese jedoch nicht auf das Ausführungsbeispiel einschränken.

### Bezugszeichenliste

- 1: erfindungsgemäße Anordnung
- 2: Zugmittel
- 3: Kette
- 4: Kopplungselement
- 5: Festkörper
- 6: Befestigungsmittel
- 7: Mutter
- 8: Kontermutter
- 9: Sensor
- 10: Scheibe
- 11: Grundkörper (des Sensors)
- 12: äußerer Ring
- 13: innerer Ring
- 14: Bodenbereich
- 15: Spalt
- 16: Dehnungsmessstreifen
- 17: Platine (für Auswerteschaltung)
- 18: Vergussmasse
- 19: Messkabel

## Patentansprüche

1. Anordnung zur Ermittlung einer an einem Zugmittel (2) angreifenden Kraft mittels eines Sensors (9),
**dadurch gekennzeichnet, dass** sich das Zugmittel (2) durch einen Festkörper (5) hindurch erstreckt und dass sich der Sensor (9) an dem Festkörper (5) abstützt und die zwischen dem Zugmittel (2) und dem Festkörper (5) wirkende Kraft misst.

2. Anordnung nach Anspruch 1, **dadurch gekennzeichnet, dass** der Festkörper (5) als Balken, Traverse, Träger oder dergleichen ausgebildet ist, wobei der Festkörper (5) Bestandteil einer Maschine sein kann.

3. Anordnung nach Anspruch 1 oder 2, **dadurch gekennzeichnet, dass** das Zugmittel (2) durch ein Seil, eine Kette (3), eine Stange oder dergleichen gebildet oder Bestandteil einer Maschine ist.

4. Anordnung nach Anspruch 2 und 3, **dadurch gekennzeichnet, dass** das Zugmittel (2) und der Festkörper (5) Bestandteil der gleichen Maschine sind, wobei die Maschine ein Gabelstapler ist.

5. Anordnung nach einem der Ansprüche 1 bis 4, **dadurch gekennzeichnet, dass** an dem sich durch den Festkörper (5) hindurch erstreckende Zugmittel (2) ein Befestigungsmittel (6) befestigt ist, das die Bewegung des Zugmittels (2) in eine Richtung verhindert, wobei das Befestigungsmittel (6) eine Mutter (7) umfassen kann, die durch eine Kontermutter (8) gesichert sein kann.

6. Anordnung nach einem der Ansprüche 1 bis 5, **dadurch gekennzeichnet, dass** die an dem Zugmittel (2) angreifende Kraft über den Sensor (9) in den Festkörper (5) einleitbar ist.

7. Anordnung nach einem der Ansprüche 1 bis 6, **dadurch gekennzeichnet, dass** der Sensor (9) einen Grundkörper (11) aufweist, wobei in dem Grundkörper (11) ein äußerer Ring (12) und ein innerhalb des äußeren Rings (12) angeordneter innerer Ringe (13) ausgebildet sind, wobei die Ringe (12, 13) des Sensors (9) biegesteif sein können und/oder wobei die Ringe (12, 13) kreisförmig und/oder konzentrisch ausgebildet sein können und/oder wobei die Ringe (12, 13) des Sensors (9) durch einen ringförmigen Bodenbereich (14) oder durch Stege miteinander verbunden sein können.

8. Anordnung nach Anspruch 7, **dadurch gekennzeichnet, dass** der Bodenbereich (14) oder die Stege unter Einwirkung der Kraft verformbar ist und/oder dass Dehnungsmessstreifen (16) vorgesehen sind, mit denen die Verformung des Bodenbereichs (14) oder der Stege detektierbar ist.

9. Anordnung nach Anspruch 7 oder 8, **dadurch gekennzeichnet, dass** die Kraft derart auf den Sensor (9) einwirkt, dass die beiden Ringe (12, 13) in axialer Richtung gegeneinander verschoben werden.

10. Anordnung nach einem der Ansprüche 7 bis 9, **dadurch gekennzeichnet, dass** die beiden Ringe (12, 13) zumindest in eine Richtung nicht bündig miteinander abschließen, wobei die Ringe (12, 13) derart angeordnet sind, dass sich ein Spalt (15) zwischen dem inneren Ring (13) und dem Festkörper (5) und/oder zwischen dem äußeren Ring (12) und einer auf dem inneren Ring (13) angeordneten Scheibe (10) ausbildet, wobei sich die Ringe (12, 13) bei Belastung des Sensors (9) derart bewegen, dass sich der Spalt (15) reduziert und wobei bei Erreichen einer maximalen Belastung der innere Ring (13) den Festkörper (5) und/oder der äußere Ring (12) die Scheibe (10) kontaktiert.

11. Anordnung nach einem der Ansprüche 1 bis 10, **dadurch gekennzeichnet, dass** zum Auswerten der Messsignale des Sensors (9) eine Auswerteschaltung vorgesehen ist.

12. Anordnung nach einem der Ansprüche 1 bis 11, **dadurch gekennzeichnet, dass** zwischen den Ringen (12, 13) ein konkaver Bereich ausgebildet ist, in dem die Auswerteelektronik angeordnet ist, wobei die Auswerteelektronik in einer Vergussmasse (18) eingebettet ist.

13. Anordnung nach Anspruch 11 oder 12, **dadurch gekennzeichnet, dass** die Auswerteelektronik eine Wheatstone'sche Brücke umfasst, und/oder dass die Auswerteelektronik ein digitales Ausgangsignal erzeugt, wobei das Ausgangssignal ein pulsweiten-moduliertes Signal umfasst.

14. Anordnung nach einem der Ansprüche 11 bis 13, **dadurch gekennzeichnet, dass** ein Messkabel (19) und/oder eine drahtlose Verbindung vorgesehen ist, wodurch eine Ausgabe des Ausgangssignals aus dem Sensor (9) ermöglicht wird.

15. Anordnung nach einem der Ansprüche 1 bis 14, **dadurch gekennzeichnet, dass** ein Speicher vorgesehen ist, in dem alle oder einzelne Messwerte des Sensors (9) protokolliert werden können, wobei lediglich die Messwerte protokolliert werden, bei denen ein vorgebbarer Wert überschritten wird und/oder wobei der Speicher in der Auswerteschaltung ausgebildet sein kann.
